# EUROPEAN PATENT APPLICATION

(11) **EP 3 716 039 A1**
(43) Date of publication of application: **30.09.2020**
(21) Application number: 19165881.4
(22) Date of filing: 28.03.2019
(51) Int. Cl.: G06F 3/16, G06F 16/958, G06F 16/58

(54) **PROCESSING AUDIO DATA**

(71) Applicant: Nokia Technologies Oy, 02610 Espoo (FI)
(72) Inventor: Eronen, Antti, 33820 Tampere (FI); Leppänen, Jussi, 33580 Tampere (FI); Lehtiniemi, Arto, 33880 Lempäälä (FI); Vilermo, Miikka, 37200 Siuro (FI)
(74) Representative: Sayer, Robert David

(57) **Abstract**

An apparatus is disclosed, comprising means for arranging a plurality of images, represented by image data, into sets, wherein each set comprises images having a related context and the plurality of the images having associated audio data. The means may also be configured to generate, for associating with each set of images, ambient audio data using the associated audio data from a plurality of the images having audio data within the associated set, the ambient audio data being for playback through a user device when one or more images of the associated set are displayed in an image browser of the user device.

## Description

### Field

Example embodiments relate to an apparatus and method of processing audio data, for example audio data associated with images in a gallery.

### Background

Computer terminals are commonly employed to browse a collection of images, for example photographs captured by a user or perhaps received from other users. The collection may be referred to as a "gallery" or similar. A dedicated photos application ("App") or utility of the computer terminal's operating system or platform may provide the gallery as a plurality of navigable thumbnail images, usually much smaller and with a lower resolution than the original images. The user may navigate the gallery using a control device, such as a mouse or using arrow keys or similar, or, as in the case of smartphone or tablet computer terminals, through touch gestures made to a touch-sensitive screen. An image may be selected for viewing in large form, at a higher resolution on the display and/or for related functions such as editing, printing or sending to contacts.

Given the prevalence of user terminals with built-in cameras, as well as the frequent sending and receiving of images via the Internet, it is common for users' galleries to comprise thumbnails of many hundreds, if not thousands of images. The vast majority of these thumbnails are not visible at a given time and hence users spend large amounts of time navigating the gallery.

### Summary

According to one aspect, there may be provided an apparatus, comprising means for: arranging a plurality of images, represented by image data, into sets, wherein each set comprises images having a related context and the plurality of the images having associated audio data; generating, for associating with each set of images, ambient audio data using the associated audio data from a plurality of the images having audio data within the associated set, the ambient audio data being for playback through a user device when one or more images of the associated set are displayed in an image browser of the user device.

The means may be further configured to provide an image browser for displaying at least some of the images on a display of the user device, which image browser is navigable by means of user input to change which images are displayed on the screen; and provide for playback, through an audio output, ambient audio data associated with the set or sets of images currently displayed by the image browser.

The means may be configured to determine if images corresponding to two or more sets are currently displayed by the image browser, and if so to playback the ambient audio data corresponding to the set having the most images current displayed.

The means may be configured, responsive to receiving user input to cause transition of displaying images of a first set to displaying images of a second set, to provide a fading effect between the ambient audio corresponding to the first set and the ambient audio corresponding to the second set.

The means may be further configured to generate, for each of the images having associated audio data, a respective audio object, also for playback through the user device with the ambient audio data when said image is displayed in the image browser of the user device.

The means may be further configured to additionally playback one or more audio objects associated with each displayed image in the image browser, dependent on the position of the one or more images in the image browser, and wherein the audio objects may move spatially as the images are moved within the image browser.

The means may be further configured to detect a pre-selection of one or more images and to playback the audio object associated with said one or more images with emphasis, or with a different effect, over other images.

The means may be configured to order the plurality of images using a predetermined criterion and to arrange into the sets of images those which are consecutive to one another in the order and have a related context.

The means may be configured to arrange the plurality of images into sets using metadata associated with each image, indicative of a respective context.

The means may be configured to generate the ambient audio data by one or more of: splicing audio data associated with a second image to the end of audio data associated with a first image, the first and second images being arranged in the same set; mixing audio data associated with two or more images in the same set; and determining an average spectral content of audio data in the set, comparing the spectral content of the audio data associated with each of two or more images in the set and ordering the audio based on how close it is to the average spectral content, the order determining how the audio data is combined into the ambience audio for the set.

The means may be configured to identify one or more images in a set having audio data comprising one or more spatial audio components, and wherein the ambient audio data is generated based on one or more of the direction and strength of the one or more spatial audio components.

The means may be configured such that one or more spatial audio components having a strength above a predetermined threshold are not present in the ambient audio data.

The means may be configured such that one or more spatial audio components in a predetermined direction are not present in the ambient audio data.

According to a second aspect, there may be provided a method, comprising: arranging a plurality of images, represented by image data, into sets, wherein each set comprises images having a related context, the plurality of the images having associated audio data; and generating, for associating with each set of images, ambient audio data using the associated audio data from a plurality of the images having audio data within the associated set, the ambient audio data being for playback through a user device when one or more images of the associated set are displayed in an image browser of the user device.

The method may further comprise displaying, through an image browser, at least some of the images on a display of the user device, which image browser is navigable by means of user input to change which images are displayed on the screen; and provide for playback, through an audio output, ambient audio data associated with the set or sets of images currently displayed by the image browser.

The method may further determine if images corresponding to two or more sets are currently displayed by the image browser, and if so to playback the ambient audio data corresponding to the set having the most images current displayed.

The method may further comprise, responsive to receiving user input to cause transition of displaying images of a first set to displaying images of a second set, to provide a fading effect between the ambient audio corresponding to the first set and the ambient audio corresponding to the second set.

The method may further comprise generating, for each of the images having associated audio data, a respective audio object, also for playback through the user device with the ambient audio data when said image is displayed in the image browser of the user device.

The method may further comprise additionally playing back one or more audio objects associated with each displayed image in the image browser, dependent on the position of the one or more images in the image browser, wherein the audio objects may move spatially as the images are moved within the image browser.

The method may further comprise detecting a pre-selection of one or more images and playing back the audio object associated with said one or more images with emphasis, or with a different effect, over other images.

The method may further comprise ordering the plurality of images using a predetermined criterion and to arrange into the sets of images those which are consecutive to one another in the order and have a related context.

The method may comprise arranging the plurality of images into sets using metadata associated with each image, indicative of a respective context.

The method may comprise generating the ambient audio data by one or more of: splicing audio data associated with a second image to the end of audio data associated with a first image, the first and second images being arranged in the same set; mixing audio data associated with two or more images in the same set; and determining an average spectral content of audio data in the set, comparing the spectral content of the audio data associated with each of two or more images in the set and ordering the audio based on how close it is to the average spectral content, the order determining how the audio data is combined into the ambience audio for the set.

The method may further comprise identifying one or more images in a set having audio data comprising one or more spatial audio components, wherein the ambient audio data is generated based on one or more of the direction and strength of the one or more spatial audio components.

The method may be performed such that one or more spatial audio components having a strength above a predetermined threshold are not present in the ambient audio data.

The method may be performed such that one or more spatial audio components in a predetermined direction are not present in the ambient audio data.

According to a third aspect, there may be provided a computer program product comprising at least one non-transitory computer-readable storage medium having computer-executable program code portions stored therein, the computer-executable program code portions comprising program code instructions for: arranging a plurality of images, represented by image data, into sets, wherein each set comprises images having a related context, the plurality of the images having associated audio data; and generating, for associating with each set of images, ambient audio data using the associated audio data from a plurality of the images having audio data within the associated set, the ambient audio data being for playback through a user device when one or more images of the associated set are displayed in an image browser of the user device.

According to a fourth aspect, there may be provided a non-transitory computer readable medium comprising program instructions stored thereon for performing a method, comprising: arranging a plurality of images, represented by image data, into sets, wherein each set comprises images having a related context, the plurality of the images having associated audio data; and generating, for associating with each set of images, ambient audio data using the associated audio data from a plurality of the images having audio data within the associated set, the ambient audio data being for playback through a user device when one or more images of the associated set are displayed in an image browser of the user device.

According to a fifth aspect, there may be provided an apparatus comprising: at least one processor; and at least one memory including computer program code which, when executed by the at least one processor, causes the apparatus: to arrange a plurality of images, represented by image data, into sets, wherein each set comprises images having a related context, the plurality of the images having associated audio data; and to generate, for associating with each set of images, ambient audio data using the associated audio data from a plurality of the images having audio data within the associated set, the ambient audio data being for playback through a user device when one or more images of the associated set are displayed in an image browser of the user device.

### Drawings

Example embodiments will now be described, by way of non-limiting example, with reference to the accompanying drawings, in which:
FIG. 1 is a perspective view of a user terminal;
FIG. 2 is a schematic view of functional modules of the FIG. 1 user terminal;
FIGS. 3A and 3B show, respectively, first and second types of non-transitory media for storing computer-readable code for performing operations according to some example embodiments;
FIG. 4 is a flow diagram showing processing operations that may be performed according to some example embodiments;
FIG. 5 is a schematic view of a system comprising the FIG. 1 user terminal and a remote server for performing pre-processing operations, according to some example embodiments;
FIG. 6A shows the FIG. 1 user terminal, when displaying on an image browser a plurality of images;
FIG. 6B is similar to FIG. 6A, indicating how image files, corresponding to the plurality of images in FIG. 6A, are allocated to a common set by virtue of their context, according to some example embodiments;
FIG. 7 is a table indicating the mapping of the FIG. 6B image files to a common set of ambient audio data and to respective audio objects, according to some example embodiments;
FIG. 8A shows the FIG. 1 user terminal, when displaying on an image browser a different plurality of images;
FIG. 8B is similar to FIG. 8A, indicating how image files, corresponding to the plurality of images in FIG. 8A, are allocated to different sets by virtue of their context, according to some example embodiments;
FIG. 9 is a table indicating a mapping of the FIG. 8B image files to different sets of ambient audio data and to respective audio objects, according to some example embodiments; and
FIG. 10 is a graph showing how the volume of respective ambient audio for given first and second sets may vary with respect to the percentage of displayed content associated with a respective set, according to some example embodiments.

### Detailed Description

Example embodiments relate to an apparatus and method of processing audio data, for example audio data associated with images for display in gallery. A gallery in this context may comprise any application or utility of a user terminal that is for displaying thumbnails of images for navigation and/or selection.

A thumbnail is a spatially smaller version of an original image, a reduced-size version and/or may be of significantly reduced resolution of the original image. The thumbnail may be encoded in a different format than the original image. The thumbnail may be a video or a still image.

At a given time, only a subset of the images may be viewable through a browser window of the gallery application. Navigation may comprise receiving user input, effective to move at least some thumbnails (currently displayed the browser window) out of the browser window and to move at least some thumbnails currently outside of the browser window into the browser window. It is therefore a way for a user to scan potentially very large numbers of images within the gallery to identify images of interest.

Selection may comprise receiving user input effective to display the original image, or at least a larger version of it, within the window. Selection may alternatively, or additionally, comprise inserting or attaching the image into a message or sending the image to another device such as a printer or larger display system.

Example embodiments provide an apparatus, method and computer program product for arranging a plurality of images, represented by image data, into sets, wherein each set comprises images having a related context and a plurality of the images having associated audio data. Further, associated with each set of images, there is generated ambient audio data using audio data from a plurality of the images having audio data within the associated set, the ambient audio data being for playback through a user device when one or more images of the associated set are displayed in an image browser of the user device. Ambient audio data may be defined as data representing background audio present in a scene or a location. It may also be referred to as environmental noise.

The plurality of images may be provided on a user terminal or may be provided elsewhere, e.g. on cloud storage, for display by the user terminal. Sometimes, the plurality of images may be stored both locally and remotely.

The images having associated audio data may be video clips or live photos. As will be appreciated, live photos may be captured in a still capture mode of a camera, but include audio data corresponding to a short period (a few seconds) of time before and/after the received capture input. Either way, some images within the gallery will have associated audio data in addition to the image data.

The apparatus may comprise any form of processing terminal, including, but not limited to, smartphones, tablet computers, laptops, digital assistants, personal computers etc. Example embodiments will focus on smartphones given that they comprise both image capture and image browsing application(s) as standard. The relatively small screen size also presents challenges in terms of navigation and browsing potentially large numbers of images in a user's gallery. As already mentioned, it is relatively common for users to have many hundreds, if not thousands, of images and viewing a subset of them at a time in a browser window presents challenges in terms of identifying what the images actually relate to, not least because of them being displayed as thumbnails. Often, thumbnails of images look similar and the specific content is only revealed once viewed at full size, meaning that many input and processing operations may be involved to locate a specific image or set of images.

Embodiments herein therefore assist browsing or navigation, at least by grouping images into "sets" of multiple images based on context, and by generating from at least two images of a set ambient audio data for playback when those images are currently in the browser window.

Embodiments may be divided into two processing stages, namely pre-processing and browsing stages. The pre-processing stage is for generating the ambient audio data for the sets of images. The pre-processing stage may be performed at the user terminal, e.g. at the smartphone, or it may be offloaded to a remote system such as a cloud computer, whereafter the images and/or the ambient audio data is provided back to the user terminal in the pre-processed form. As will be explained later on, individual images may also have respective audio objects associated with them, providing other navigational enhancements. The browsing stage may be performed at the user terminal after the pre-processing stage, and is concerned with how the ambient audio data is played based on what images are currently displayed in the browser window. Again, this may also take into account individual audio objects and where they are placed in the browser window.

Accordingly, the means may be further configured to provide an image browser for displaying at least some of the images on a display of the user device, which user interface is navigable by means of user input to change which images are displayed on the screen, and to playback, through a an audio output, ambient audio data associated with the set or sets of images currently displayed by the image browser.

The apparatus may playback the audio data using any suitable means, for example through one or more loudspeakers of the apparatus, through one or more remote loudspeakers, or through earphones, which may be wired or wireless.

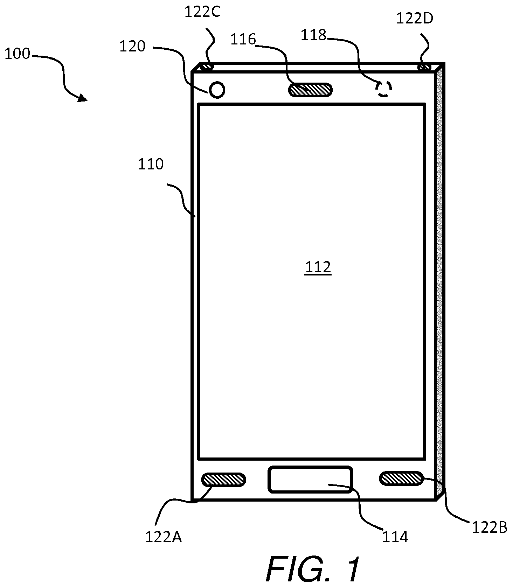

FIG. 1 shows a user terminal 100 according to an example embodiment. The user terminal 100 may comprise a casing 110, a display 112, a microphone 114, a first loudspeaker 116, a rear-facing camera 118 and a front-facing camera 120. The display 112 may be a touch-sensitive display. The microphone 114 may be positioned on the casing 110 so as to be located in proximity of a user's mouth when in use. The first loudspeaker 116 may be positioned on the casing 110 so as to be located in proximity of a user's ear when in use. One or more further loudspeakers 122A - 122D may also be provided on the casing 110 at various positions for the output of various types of audio data, for example audio data that has a directional component, such as stereo audio or spatial audio. The user terminal 100 may comprise a smartphone or tablet computer, for example. One or more hard buttons (not shown) may also be provided on the casing 110 for user input, for example a power button, volume buttons, selection buttons and so on. However, save perhaps for the power button, all functionality may alternatively be provided by soft buttons displayed on the display 112 when the user terminal 100 is powered-on. Further, one or more external ports may be provided for supplying power and/or for connecting the user terminal 100 to external devices such as headphones.

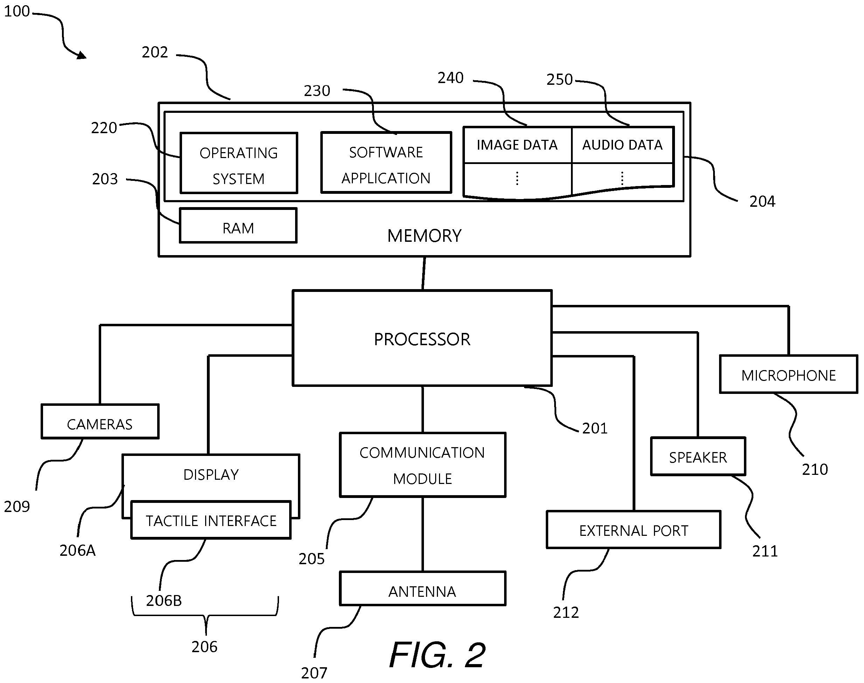

FIG. 2 is a schematic diagram of functional modules of the user terminal 100. The user terminal 100 may have a processor 201, a memory 202 closely-coupled to the processor and comprised of a RAM 203 and ROM 204. The user terminal 100 may comprise a communication module 205, and a display 206. The display 206 may comprise a display portion 206A and a tactile interface 206B for receiving touch inputs and/or by using a hovering gesture input. The communication module 205 may comprise one or more such network interfaces for connection to a network, e.g. a radio access network, via an antenna 207. The communication module 205 may also be for connection to the internet, e.g. using WiFi or similar, such as 3G, LTE, 5G or other network protocols or future network protocols, including, for example, Bluetooth. Additionally, the cameras 209, microphone 210, speaker 211 and external port 212 elements are also shown connected to the processor 201. The cameras 209 may correspond to the rear and front -facing cameras 118, 120 shown in FIG. 1. The speaker 211 may correspond to the one or more loudspeakers 116, 122A - 122D shown in FIG. 1.

The processor 201 is connected to each of the other components in order to control operation thereof. Alternatively, or additionally, the user terminal 100 may also comprise sensors such as one or more accelerometers and/or gyroscopes for individually or in combination sensing one or more user gestures, e.g. particular movements, which may serve as inputs in any of the above example embodiments.

The memory 202 may comprise a non-volatile memory, a hard disk drive (HDD) or a solid state drive (SSD). The ROM 204 of the memory 202 stores, amongst other things, an operating system 220 and may store one or more software applications 230. The ROM 204 may also store user files, such as a plurality of images represented by image data 240 and, corresponding to at least some of the image data, audio data 250. Also associated with each image, and therefore the image and audio data 240, 250 may be provided metadata including metadata generated at the time the image was captured. For example, the metadata may comprise the time, date, camera settings and/or GPS location at the time of image capture.

The RAM 203 of the memory 202 may be used by the processor 201 for the temporary storage of data. The operating system 220 may contain code which, when executed by the processor 201, implements the operations as described above and also below, for example in the flow diagrams to be described below.

The processor 201 may take any suitable form. For instance, the processor 201 may be a microcontroller, plural microcontrollers, a processor, or plural processors and the processor may comprise processor circuitry.

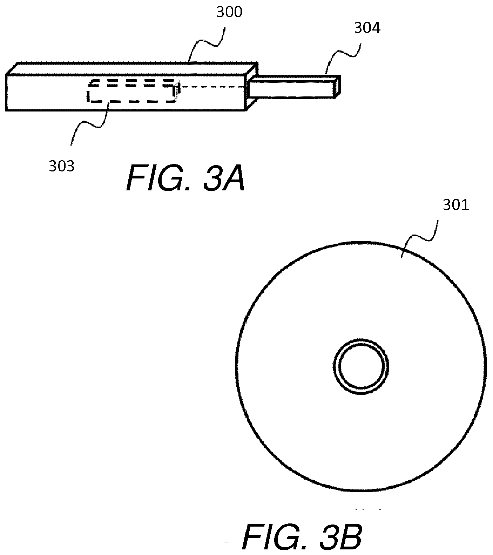

FIG. 3A and FIG. 3B show tangible non-volatile storage media, respectively a removable memory unit 300 and a compact disc (CD) 301, each storing computer-readable code which when run by a computer may perform methods according to example embodiments described herein. The removable memory unit 300 may be a memory stick, e.g. a USB memory stick, having internal memory 303 storing the computer-readable code. The internal memory 303 may be accessed by a computer system via a connector 904. The CD 901 may be a CD-ROM or a DVD or similar. Other forms of tangible storage media may be used.

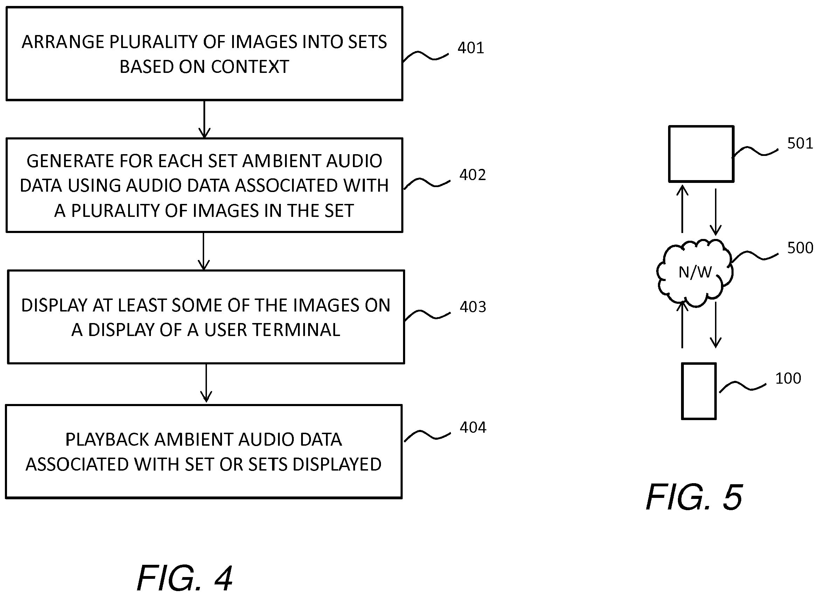

FIG. 4 is a flow diagram showing processing operations that may be performed by the user terminal 100. For example, the processing operations may be performed by computer-readable instructions stored on the memory 202 or on the non-volatile memory shown in FIG. 3. Alternatively, the processing operations may be performed by hardware or a combination of hardware and software. The order of reference numerals is not necessarily indicative of the order of processing. One or more operations may be omitted and/or re-ordered.

A first operation 401 may comprise arranging a plurality of images into sets based on context.

A second operation 402 may comprise generating, for each set of images, ambient audio data using the audio data associated with two or more images in the set.

The first and second operations 401, 402 may comprise the pre-processing stage mentioned above.

In the first operation 401, the plurality of images may be ordered based on some criterion or criteria. For example, the images may be ordered using metadata associated with each image, indicative of a respective context. The metadata associated with each image may be representative of a location, date and/or time of image capture. So, images having the same date or time range may be arranged as a set. Further, images having the same date or time range may be arranged as separate sets if associated with a different location.

Additionally, or alternatively, the means may be configured to arrange the plurality of images into sets by means of image and/or audio analysis of the respective image data and/or the video data for each image to identify a respective context. In this regard, for example, if the content of the image data represents a common object or scene, then such images may be grouped as a set.

In some embodiments, each set may comprise a predetermined minimum number of images. For example, at least six images having the predetermined criterion or criteria may be needed to comprise a set; otherwise the images may be treated as individual images not requiring ambient audio.

In the second operation 402, there are a number of ways for generating the ambient audio data.

For example, generating the ambient audio data may comprise splicing audio data associated with a second image to the end of audio data associated with a first image, the first and second images being arranged in the same set.

For example, generating the ambient audio data may comprise mixing audio data associated with two or more images in the same set.

For example, generating the ambient audio data may be based on the average spectral content of the audio data. For example, the process may comprise determining an average spectral content of audio data in the set, comparing the spectral content of the audio data associated with each of two or more images in the set, and ordering the audio based on how close it is to the average spectral content, the order determining how the audio data is combined into the ambience audio for the set.

A third operation 403 may comprise displaying at least some of the images on a display of the user terminal 100.

A fourth operation 404 may comprise playing back the ambient audio data associated with one or more sets corresponding to the images displayed.

For example, if most of the images displayed in the browser window correspond to a first set, then the ambient audio data associated with that first set may be played. For example, if a minority of the images displayed in the browser window correspond to a second set, then the ambient audio data associated with that second set may not be played, or may be played at a lesser volume than the first set. For example, the volume and/or effect of the ambient audio data that is played back may depend on user input, such as the direction of navigation.

For example, responsive to receiving user input to cause transition of displaying images of a first set to displaying images of a second set, there may be a fading effect between the ambient audio corresponding to the first set and the ambient audio corresponding to the second set. The type or level of mixing may depend on the number of images of each set that are displayed at a given time.

Referring to FIG. 5, there is shown another example embodiment comprising the user terminal 100 in communication with a cloud server 501 via a network 500. In this embodiment, it may be that the pre-processing operations 401, 402 of FIG. 4 may be performed at the cloud server 501. The browsing operations 403, 404 will be performed at the user terminal 100.

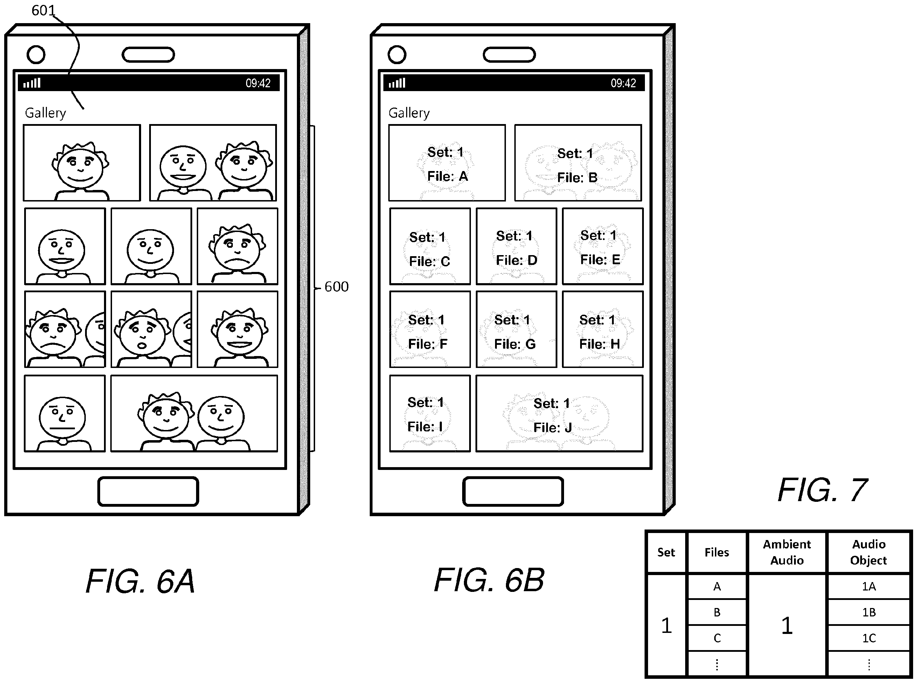

Referring to FIGS. 6A and 6B, for example, a set of images 600 is indicated in a current browser window 601. It may be determined that the set of images 600 have a related context by virtue of any of the above criterion or criteria. As such, the images 600, for example the files corresponding to those images, may be assigned as a common set #1, as indicated in FIG. 6B. As shown in FIG. 7, the files may comprise a common ambient audio set # 1 and hence in this situation, ambient audio for this audio object may be played back to inform the user of the context based on two or more ambient audio files. The ambient audio set # 1 may comprise, or refer to, ambient audio data, generated using audio data associated with two or more of the files in the common set #1. In generating the ambient audio data, any suitable method such as one or more of the methods described above, may be used. The ambient audio data may be stored as an ambient audio data file.

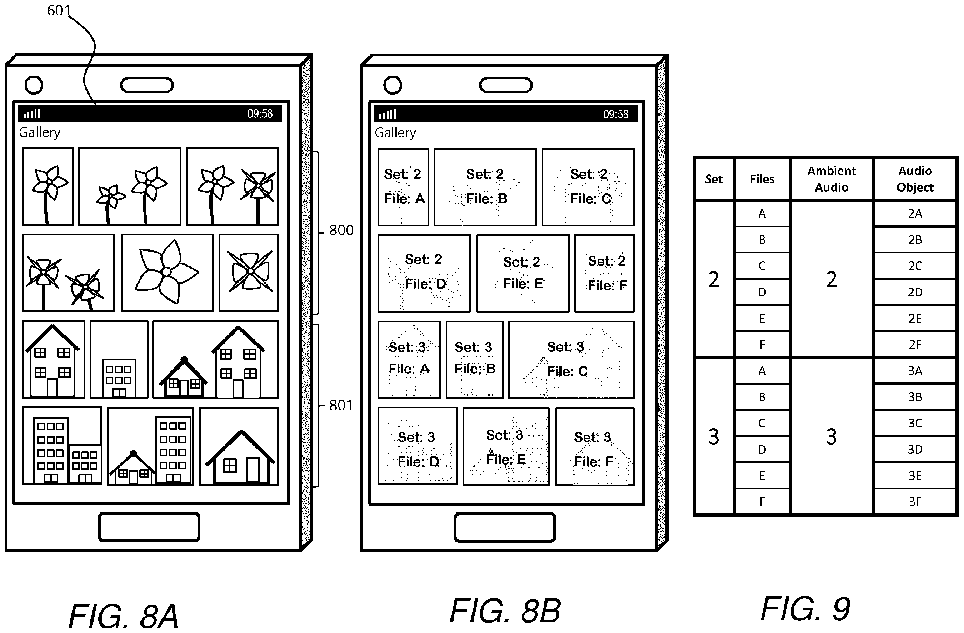

Referring to FIGS. 8A and 8B, for example, some of a second set of images 800 is indicated in the current browser window 601. It may be determined that the set of images 800 have a related context by virtue of any of the above criterion or criteria. Additionally, some of a third set of images 801 is also indicated in the current browser window 601. As shown in FIG. 9, the second set of images 800 may be assigned as a common set #2, and the third set of images 801 may be assigned as a common set #3. In this situation, ambient audio data for both audio objects #2 and #3 may be played back to inform the user of the context based on two or more ambient audio files. For example, both ambient audio files may be played with equal volume. Alternatively, the volume may be dependent on the direction of navigation. For example, if the second set of images 800 was previously displayed, occupying the majority of the browser window 601, then the ambient audio for set #2 may fade over to the ambient audio for set #3. The opposite order of playback with fading may be produced if navigation is in the opposite direction.

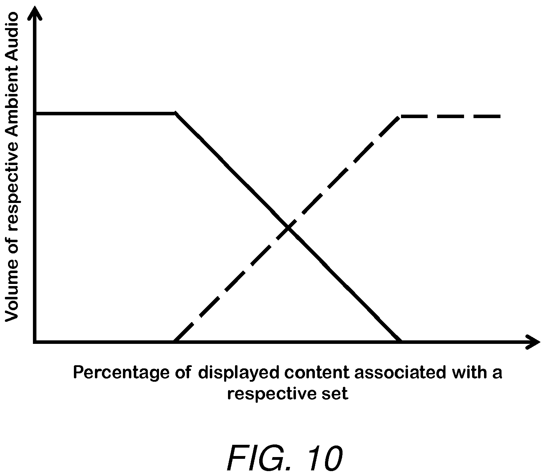

FIG. 10 is a graph illustrating the volume of respective ambient audio data for given first and second sets with respect to the percentage of displayed content associated with a respective set.

In some embodiments, where the audio data for at least some of the images includes spatial components, which may be the case if the capturing device comprises a plurality of microphones, then generating the ambient audio data may need to take spatial components into account. For example, only audio data for which there are no strong (high-volume or energy) directional audio components may be used in generating the ambient audio data. The presence or absence of directional components and their energy levels may be indicated in the metadata. Further, the generating of the ambient audio data may utilize directional components to emphasize, using beamforming, directions the user is not interested in. A simple example would be to beam form directly from left, right, up and down, because the user would likely have been focussed on objects directly in front of where the camera was pointing at capture time, or what is behind the camera. Left and right beams may be utilized to create a stereo ambience in some embodiments, by putting the left beam to a left channel output and the right beam to a right channel output.

Referring back to FIGS. 7 and 9, it will be seen that, for each of the images having associated audio data, a respective audio object may also be provided, also for playback through the user device with the ambient audio data when said image is displayed in an image browser of the user device. For example, the audio objects #iA, #iB and i#C may be provided based on the audio data associated with said images.

In some embodiments, audio objects associated with respective displayed image in the image browser may be played back also, dependent on the position of the one or more images in the image browser. The audio objects may move spatially as the images are moved within the image browser. The audio objects may be converted from an original format, e.g. stereo, to a different format, e.g. monaural. The audio object may have a spatial format, e.g. comprising one or more spatial components, which may be the case if the capturing device comprises a plurality of microphones. The spatial components may have respective energy levels and may vary with time.

Thus, in addition to the ambient audio being played to indicate to the user the one or more sets of thumbnails being browsed, an indication of individual images may also be provided by the image audio objects. Where multiple loudspeakers 122A - 122D are provided on the user terminal 100, an audio object corresponding to an image at or near the top left of the browser window may be played, or played with higher volume, from the top left speaker, whereas an audio object corresponding to an image at or near the bottom right of the browser window may be played, or played with higher volume, from the bottom right speaker, and so forth. The audio objects and/or the ambient audio may also be played binaurally through, for example, headphones or the like.

Thus, in addition to the ambient audio data providing navigational assistance to what the shown thumbnail image set(s) represent, a more granular representation of what the individual images within a set actually represent.

To give a practical example, consider a user browsing an image gallery that comprises first multiple images captured at a sports event and second multiple images captured at a music concert. The sports event images may comprise audio including aspects of the event and crowd noise. The music concert may comprise audio including aspects of the music and different crowd noise.

The ordering of the images may be done already based on the date, time and/or position of capture. However, a re-ordering may be done based on other factors. Sets of images may be allocated based on the first images being captured on a different day or location than the second images. Different sets of ambient audio data may be generated for each set, and at least each image having audio may have a corresponding audio object.

During the browsing phase, the user may view in the browser window mainly images from the music concert, and, as such, hears ambient audio data associated with the music event based on any of the above combining or mixing techniques. Further, audio object data may be played back corresponding to the position of the object within the browser window. The user may scroll up the images, so that thumbnails corresponding to the sports event come into view. The ambient audio data may then fade from the music concert to the sports event ambient audio data as the number of new images come into view. Also, the audio object data for individual images may move downwards, spatially, with the scrolling. Therefore, despite the thumbnails being potentially similar in terms of low resolution content, the user is made aware of the content and context of the captured images through the rendered audio data.

In some embodiments, the user terminal 100 may be configured such that the location of a user's finger or other body part can be detected in proximity to the display 112, e.g. hovering above the display to indicate a pre-selection. In this case, the image over which the user's finger is "hovering" may be shown differently, and/or the audio object corresponding to that image may be played differently, e.g. louder and/or with some effect.

In other embodiments, spatial metadata for ambient data creation may comprise direction and ratio metadata for time-frequency tiles of the audio data. An example of such metadata may comprise direction-of-arrival (DoA) and ratio of energy of direct sound to the energy of ambient sound. Direct sound may be defined as a sound with a perceivable DOA and ambient sound as a portion of the sound field with no apparent DOA. The ambience creation may create a combined ambience of similar ambience segments of several images. An example method may comprise:
- obtain audio clips of plural ambient signals which are content-wise similar; content wise similarity can be measured, for example, by similarity of the average spectral content of the ambiance items;
- calculate the average spectrum over the ambient signals;
- determine which of the ambient signals is closest to the average ambient signal by comparing the spectra of each ambient signal to the average ambient signal;
- select a representative portion of the ambient signal closest to the average ambient signal as the starting ambient section, and then continue with a section of the ambient signal of the second most similar ambient signal;
- the method may continue in this way until a desired length ambient signal is obtained.

In this way, the method may obtain an ambient signal which combines portions of ambient signals of the group, and where the ambient signal progressively develops from the average ambient signal towards different variations of the ambient signals in the group.

Example embodiments provide for a more intuitive and pleasing browsing experience, allowing users to more quickly and efficiently locate images based on associated and processed audio data, which may result in less navigational inputs and processing operations.

In the foregoing, any reference to "means" may refer to the means as comprising: at least one processor; and at least one memory including computer program code, the at least one memory and computer program code configured to, with the at least one processor, cause the performance of the apparatus.

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. Some example embodiments may be implemented in the cloud and utilize virtualized modules.

Example embodiments of the present invention may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any non-transitory media or means that can contain, store, communicate, propagate or transport the instructions for use by or in connection with an instruction execution system, apparatus, or device, such as a computer.

Reference to, where relevant, "memory" or "non-volatile storage media" may refer to any form of data storage means, including the examples shown in FIGS. 3A and 3B. References to "computer program product", "tangibly embodied computer program" etc., or a "processor" or "processing circuitry" etc. should be understood to encompass not only computers having differing architectures such as single/multi-processor architectures and sequencers/parallel architectures, but also specialised circuits such as field programmable gate arrays FPGA, application specify circuits ASIC, signal processing devices and other devices. References to computer program, instructions, code etc. should be understood to express software for a programmable processor firmware such as the programmable content of a hardware device as instructions for a processor or configured or configuration settings for a fixed function device, gate array, programmable logic device, etc.

As used in this application, the term "circuitry" refers to all of the following: (a) hardware-only circuit implementations (such as implementations in only analogue and/or digital circuitry) and (b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a server, to perform various functions) and (c) to circuits, such as a microprocessor(s) or a portion of a microprocessor(s), that require software or firmware for operation, even if the software or firmware is not physically present.

In this brief description, reference has been made to various examples. The description of features or functions in relation to an example indicates that those features or functions are present in that example. The use of the term 'example' or 'for example' or 'may' in the text denotes, whether explicitly stated or not, that such features or functions are present in at least the described example, whether described as an example or not, and that they can be, but are not necessarily, present in some of or all other examples. Thus 'example', 'for example' or 'may' refers to a particular instance in a class of examples. A property of the instance can be a property of only that instance or a property of the class or a property of a sub-class of the class that includes some but not all of the instances in the class. It is therefore implicitly disclosed that a features described with reference to one example but not with reference to another example, can where possible be used in that other example but does not necessarily have to be used in that other example.

Although embodiments of the present invention have been described in the preceding paragraphs with reference to various examples, it should be appreciated that modifications to the examples given can be made without departing from the scope of the invention as claimed.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

Whilst endeavoring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. An apparatus, comprising means for:
arranging a plurality of images, represented by image data, into sets, wherein each set comprises images having a related context and the plurality of the images having associated audio data;
generating, for associating with each set of images, ambient audio data using the associated audio data from a plurality of the images having audio data within the associated set, the ambient audio data being for playback through a user device when one or more images of the associated set are displayed in an image browser of the user device.

2. The apparatus of claim 1, wherein the means is further configured to:
provide an image browser for displaying at least some of the images on a display of the user device, which image browser is navigable by means of user input to change which images are displayed on the screen; and
provide for playback, through an audio output, ambient audio data associated with the set or sets of images currently displayed by the image browser.

3. The apparatus of claim 2, wherein the means is configured to determine if images corresponding to two or more sets are currently displayed by the image browser, and if so to playback the ambient audio data corresponding to the set having the most images current displayed.

4. The apparatus of claim 2 or claim 3, wherein the means is configured, responsive to receiving user input to cause transition of displaying images of a first set to displaying images of a second set, to provide a fading effect between the ambient audio corresponding to the first set and the ambient audio corresponding to the second set.

5. The apparatus of any of claims 2 to 4, wherein the means is further configured to generate, for each of the images having associated audio data, a respective audio object, also for playback through the user device with the ambient audio data when said image is displayed in the image browser of the user device.

6. The apparatus of claim 5, wherein the means is further configured to additionally playback one or more audio objects associated with each displayed image in the image browser, dependent on the position of the one or more images in the image browser, and wherein the audio objects may move spatially as the images are moved within the image browser.

7. The apparatus of claim 5 or claim 6, wherein the means is further configured to detect a pre-selection of one or more images and to playback the audio object associated with said one or more images with emphasis, or with a different effect, over other images.

8. The apparatus of any preceding claim, wherein the means is configured to order the plurality of images using a predetermined criterion and to arrange into the sets of images those which are consecutive to one another in the order and have a related context.

9. The apparatus of any preceding claim, wherein the means is configured to arrange the plurality of images into sets using metadata associated with each image, indicative of a respective context.

10. The apparatus of any preceding claim, wherein the means is configured to generate the ambient audio data by one or more of:
splicing audio data associated with a second image to the end of audio data associated with a first image, the first and second images being arranged in the same set;
mixing audio data associated with two or more images in the same set; and
determining an average spectral content of audio data in the set, comparing the spectral content of the audio data associated with each of two or more images in the set and ordering the audio based on how close it is to the average spectral content, the order determining how the audio data is combined into the ambience audio for the set.

11. The apparatus of any preceding claim, wherein the means is configured to identify one or more images in a set having audio data comprising one or more spatial audio components, and wherein the ambient audio data is generated based on one or more of the direction and strength of the one or more spatial audio components.

12. The apparatus of claim 11, wherein the means is configured such that one or more spatial audio components having a strength above a predetermined threshold are not present in the ambient audio data.

13. The apparatus of claim 11 or claim 12, wherein the means is configured such that one or more spatial audio components in a predetermined direction are not present in the ambient audio data.

14. A method, comprising:
arranging a plurality of images, represented by image data, into sets, wherein each set comprises images having a related context, the plurality of the images having associated audio data;
generating, for associating with each set of images, ambient audio data using the associated audio data from a plurality of the images having audio data within the associated set, the ambient audio data being for playback through a user device when one or more images of the associated set are displayed in an image browser of the user device.

15. A computer program product comprising at least one non-transitory computer-readable storage medium having computer-executable program code portions stored therein, the computer-executable program code portions comprising program code instructions for:
arranging a plurality of images, represented by image data, into sets, wherein each set comprises images having a related context, the plurality of the images having associated audio data;
generating, for associating with each set of images, ambient audio data using the associated audio data from a plurality of the images having audio data within the associated set, the ambient audio data being for playback through a user device when one or more images of the associated set are displayed in an image browser of the user device.
